# EUROPEAN PATENT APPLICATION

(11) **EP 4 844 109 A1**
(43) Date of publication of application: **25.11.2026**
(21) Application number: 25777441.4
(22) Date of filing: 27.01.2025
(51) Int. Cl.: C25B 9/67, C25B 1/042, C25B 9/00

(54) **ELECTROLYSIS MODULE COOLING METHOD AND ELECTROLYSIS SYSTEM**

(30) Priority: 29.03.2024 JP 2024057212
(71) Applicant: Mitsubishi Heavy Industries, Ltd., Chiyoda-ku Tokyo 100-8332 (JP)
(72) Inventor: KOBAYASHI, Daigo, Tokyo 100-8332 (JP); FUJII, Kazuki, Tokyo 100-8332 (JP); MORI, Ryutaro, Tokyo 100-8332 (JP); KOSAKA, Kenichiro, Tokyo 100-8332 (JP); KATO, Masayuki, Tokyo 100-8332 (JP)
(74) Representative: Müller Schupfner & Partner Patent- und Rechtsanwaltspartnerschaft mbB (Muc)
(86) International application number: PCT/JP2025/002468
(87) International publication number: WO 2025/204074

(57) **Abstract**

An electrolysis module cooling method and an electrolysis system that can reduce an atmosphere temperature inside a container are provided. The electrolysis module cooling method is a method for cooling an electrolysis module (200) that includes at least one electrolysis cartridge (220) including an electrolysis cell and generating hydrogen by electrolyzing steam generated from feedwater, and a pressure vessel (210) accommodating the electrolysis cartridge (220). The electrolysis module cooling method includes exchanging heat between air and the feedwater to heat the feedwater, and supplying the heat-exchanged air to the pressure vessel (210) to cool an inside of the pressure vessel (210).

## Description

### Technical Field

The present disclosure relates to an electrolysis module cooling method and an electrolysis system.

### Background Art

For example, PTL 1 discloses a steam electrolysis system that generates hydrogen by steam electrolysis.

The system disclosed in PTL 1 includes a module having a solid oxide electrolysis cell (SOEC).

### Citation List

### Patent Literatures

[PTL 1] Japanese Patent No. 7282968
[PTL 2] Japanese Unexamined Patent Application Publication No. 2018-133305

### Summary of Invention

### Technical Problem

In a steam electrolysis system, an atmosphere temperature inside a pressure vessel is, for example, approximately 400°C to 450°C. Therefore, it is necessary to use materials having high heat resistance, such as using, for a structural member housed inside the container, for example, a stainless material instead of carbon steel and using, for a current-carrying member, for example, a nickel material instead of a copper-based material, which is a factor in an increase in equipment cost.

Accordingly, in order to reduce a hydrogen production unit cost, it is necessary to reduce the equipment cost, and in order to reduce the equipment cost by using, as a material of a structural member housed inside the pressure vessel, a relatively inexpensive material that does not have high heat resistance, for example, reduction of an atmosphere temperature inside the pressure vessel has been considered.

On the other hand, from the viewpoint of efficiency of the steam electrolysis system as a whole, it is desirable to increase pressure (for example, approximately 3 MPa to 5 MPa), and it is estimated that the atmosphere temperature inside the pressure vessel increases with an increase in pressure of the system, and therefore it is necessary to reduce the atmosphere temperature also as a countermeasure therefor.

The reason why it is desirable to increase the pressure of the steam electrolysis system is as follows. That is, the generated hydrogen is often used after being pressurized finally, and less power is required to increase pressure of water serving as a raw material than to increase pressure of the generated hydrogen.

The present disclosure has been made in view of such circumstances, and an object of the present disclosure is to provide an electrolysis module cooling method and an electrolysis system that can reduce an atmosphere temperature inside a container.

### Solution to Problem

To solve the above problem, the electrolysis module cooling method and electrolysis system according to the present disclosure employ the following means.

An electrolysis module cooling method according to an aspect of the present disclosure is an electrolysis module cooling method for cooling an electrolysis module including at least one electrolysis cartridge that includes an electrolysis cell having a cathode, an anode, and an electrolyte layer disposed between the cathode and the anode, the at least one electrolysis cartridge generating hydrogen by electrolyzing steam generated from feedwater, and a container accommodating the electrolysis cartridge, the electrolysis module cooling method including exchanging heat between a heat medium gas and the feedwater to heat the feedwater, and supplying the heat-exchanged heat medium gas to the container to cool an inside of the container.

In addition, an electrolysis system according to an aspect of the present disclosure includes an electrolysis module, a heat exchanger, and a heat medium gas supply line, in which the electrolysis module has at least one electrolysis cartridge and a container, the electrolysis cartridge includes an electrolysis cell having a cathode, an anode, and an electrolyte layer disposed between the cathode and the anode, and generates hydrogen by electrolyzing steam generated from feedwater, the container accommodates the electrolysis cartridge, and the heat medium gas supply line is a line through which a heat medium gas flows and is configured to supply, to the heat exchanger, the heat medium gas as a heat source for heating the feedwater and to supply, to the container, the heat medium gas subjected to heat exchange in the heat exchanger.

### Advantageous Effects of Invention

According to the present disclosure, it is possible to reduce an atmosphere temperature inside a container.

### Brief Description of Drawings

FIG. 1 is a schematic configuration view of a steam electrolysis system according to a first embodiment of the present disclosure.
FIG. 2 is a configuration view of an electrolysis module included in the steam electrolysis system shown in FIG. 1.
FIG. 3 is a side view of an electrolysis cartridge included in the electrolysis module.
FIG. 4 is a front view of the electrolysis cartridge shown in FIG. 3.
FIG. 5 is a schematic view showing a structure of the electrolysis cartridge shown in FIG. 4.
FIG. 6 is a partially enlarged sectional view of a cell stack in the vicinity of an electrolysis cell shown in FIG. 5.
FIG. 7 is a schematic view of an electrolysis cartridge included in the electrolysis module shown in FIG. 2.
FIG. 8 is a configuration view of the electrolysis module included in the steam electrolysis system shown in FIG. 1 (Other Example 1).
FIG. 9 is a configuration view of the electrolysis module included in the steam electrolysis system shown in FIG. 1 (Other Example 2).
FIG. 10 is a schematic configuration view of a steam electrolysis system according to a second embodiment of the present disclosure.
FIG. 11 is a schematic configuration view of a steam electrolysis system according to a third embodiment of the present disclosure.
FIG. 12 is a configuration view of an electrolysis module included in the steam electrolysis system shown in FIG. 10.
FIG. 13 is a schematic configuration view of a steam electrolysis system according to a fourth embodiment of the present disclosure.
FIG. 14 is a schematic configuration view of a steam electrolysis system according to a fifth embodiment of the present disclosure.

### Description of Embodiments

Hereinafter, an electrolysis module cooling method and an electrolysis system according to first to fifth embodiments of the present disclosure will be described with reference to the drawings.

The terms "height direction", "depth direction", and "width direction" are for description and do not limit actual orientations of the electrolysis module and the steam electrolysis system.

In addition, the "height direction", the "depth direction", and the "width direction" are orthogonal to one another.

### [First Embodiment]

### <System Overview>

A steam electrolysis system 10 as an example of an electrolysis system is a system that produces hydrogen by electrolyzing steam generated by heating feedwater under high temperature and high pressure.

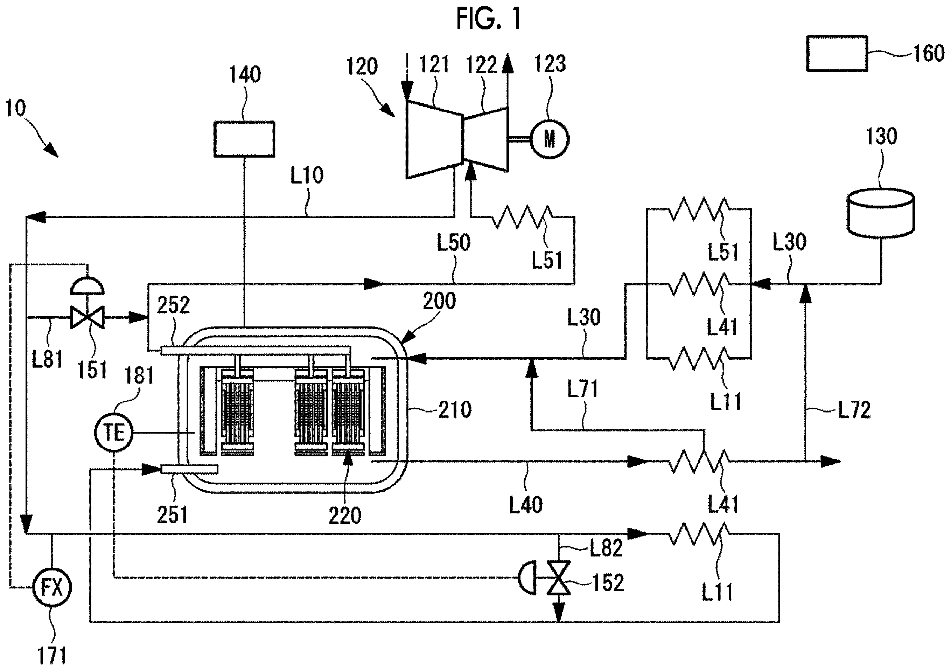

As shown in FIG. 1, the steam electrolysis system 10 includes an electrolysis module 200, a plurality of heat exchangers L11, L41, and L51, a compression device 120, a feedwater supply device 130, a power supply device 140, and lines (piping systems) connecting the devices/the pieces of equipment to one another.

The electrolysis module 200 is a device that performs steam electrolysis.

Although details will be described later, the electrolysis module 200 is, in outline, a device that electrolyzes supplied steam under high temperature and high pressure.

Each of the heat exchangers L11, L41, and L51 is a device that heats feedwater and/or heats feedwater to generate steam supplied to the electrolysis module 200.

The compression device 120 is a device that compresses a heat medium gas supplied to the electrolysis module 200. Examples of the heat medium gas include an oxidizing gas such as air. In the following description, air is used as the heat medium gas.

The compression device 120 has a compressor 121, a turbine 122, and an electric motor 123.

The compressor 121 and the turbine 122 are connected by the same rotating shaft, and are configured such that the compressor 121 is driven by rotation of the turbine 122. The electric motor 123 is configured to drive the compressor 121 or to assist driving of the compressor 121 when output of the turbine 122 is low (for example, when the steam electrolysis system 10 is started).

The feedwater supply device 130 is a device that stores and sends water (feedwater). The feedwater is heated by the heat exchangers L11, L41, and L51 and becomes steam.

The power supply device 140 is a device that supplies electric power used for steam electrolysis to the electrolysis module 200.

The compressor 121 of the compression device 120 is connected to the electrolysis module 200 through a primary air supply line L10. That is, the primary air supply line L10 connects the compressor 121 and the electrolysis module 200 to each other. High-temperature and high-pressure air compressed by the compressor 121 is supplied to the electrolysis module 200 through the primary air supply line L10.

The heat exchanger L11 is provided in the primary air supply line L10. The heat exchanger L11 serves as a heat source for heating feedwater. Therefore, the air supplied to the electrolysis module 200 is air after heat exchange with feedwater, and a temperature thereof is lower than a temperature before the heat exchange (for example, approximately 300°C to 400°C), and is, for example, approximately 200°C to 300°C.

The turbine 122 of the compression device 120 is connected to the electrolysis module 200 through an oxygen-enriched air exhaust line L50. That is, the oxygen-enriched air exhaust line L50 connects the turbine 122 and the electrolysis module 200 to each other. High-temperature and high-pressure oxygen-enriched air exhausted from the electrolysis module 200 is guided to the turbine 122 through the oxygen-enriched air exhaust line L50, and rotationally drives the turbine 122.

The heat exchanger L51 is provided in the oxygen-enriched air exhaust line L50. The heat exchanger L51 serves as a heat source for heating feedwater.

A hydrogen exhaust line L40 is connected to the electrolysis module 200. High-temperature and high-pressure hydrogen generated and exhausted from the electrolysis module 200 and a portion of steam (steam remaining without being electrolyzed) are supplied to an outside of the electrolysis module 200 (for example, a facility that stores hydrogen) through the hydrogen exhaust line L40.

A heat exchanger L41 is provided in the hydrogen exhaust line L40. The heat exchanger L41 serves as a heat source for heating feedwater.

The feedwater supply device 130 is connected to the electrolysis module 200 through a water/steam supply line L30. That is, the water/steam supply line L30 connects the feedwater supply device 130 and the electrolysis module 200 to each other.

For example, the heat exchangers L11, L51, and L41 are provided in parallel in the water/steam supply line L30. Feedwater flowing through the water/steam supply line L30 is heated and becomes steam in the course of passing through the heat exchangers L11, L41, and L51. That is, feedwater sent from the feedwater supply device 130 is heated by the heat exchangers L11, L41, and L51 and becomes steam, and the generated high-temperature steam is supplied to the electrolysis module 200. As described above, heat sources for heating feedwater are air flowing through the heat exchanger L11, oxygen-enriched air flowing through the heat exchanger L51, and hydrogen flowing through the heat exchanger L41.

A heat exchanger other than the heat exchangers L11, L51, and L41 (a heat exchanger through which a fluid for heating feedwater flows) may be further provided in the water/steam supply line L30. In addition, each heat exchanger may be provided in series in the water/steam supply line L30. Furthermore, only some of the heat exchangers may be provided in parallel in the water/steam supply line L30, and the other heat exchangers may be provided in series.

### <Details of Electrolysis Module>

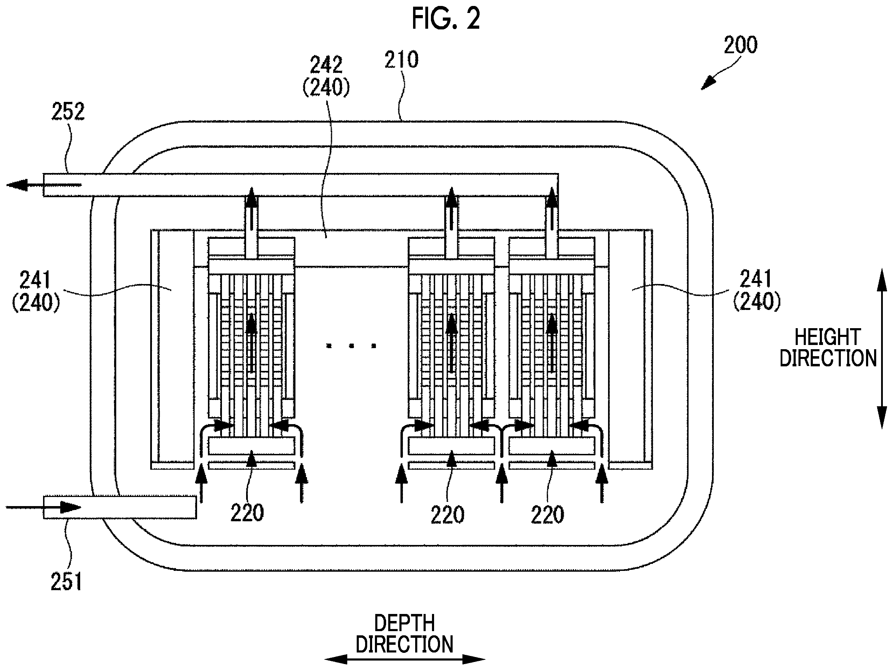

As shown in FIG. 2, the electrolysis module 200 includes a pressure vessel 210, a plurality of electrolysis cartridges 220, submodule insulation 240, a supply main pipe 251, and an exhaust main pipe 252.

The pressure vessel 210 is a metal container, and a space is formed inside the pressure vessel 210.

Insulation (heat insulating material) may be provided on an inner surface of the pressure vessel 210.

A submodule including the plurality of electrolysis cartridges 220 and the submodule insulation 240 provided around the electrolysis cartridges 220 is accommodated inside the pressure vessel 210.

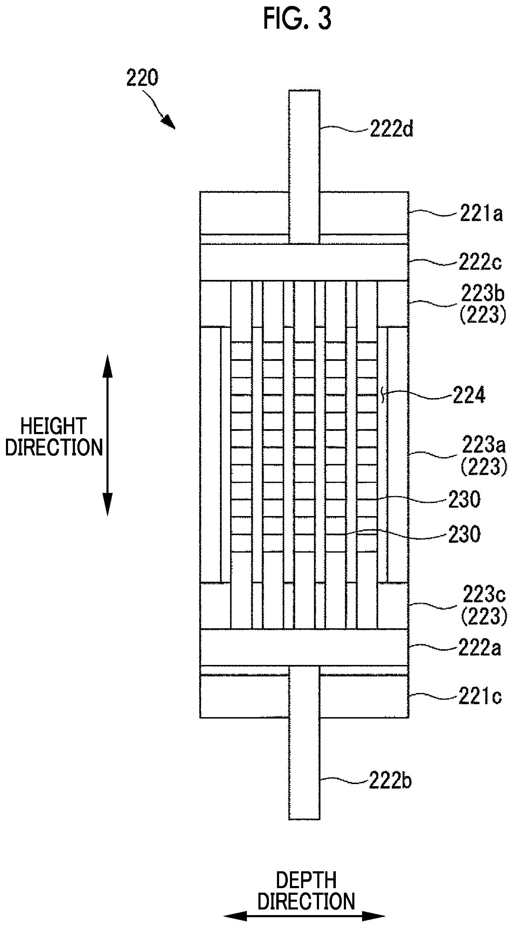

The detailed configuration of the electrolysis cartridge 220 will be described with reference to FIGS. 3 to 6.

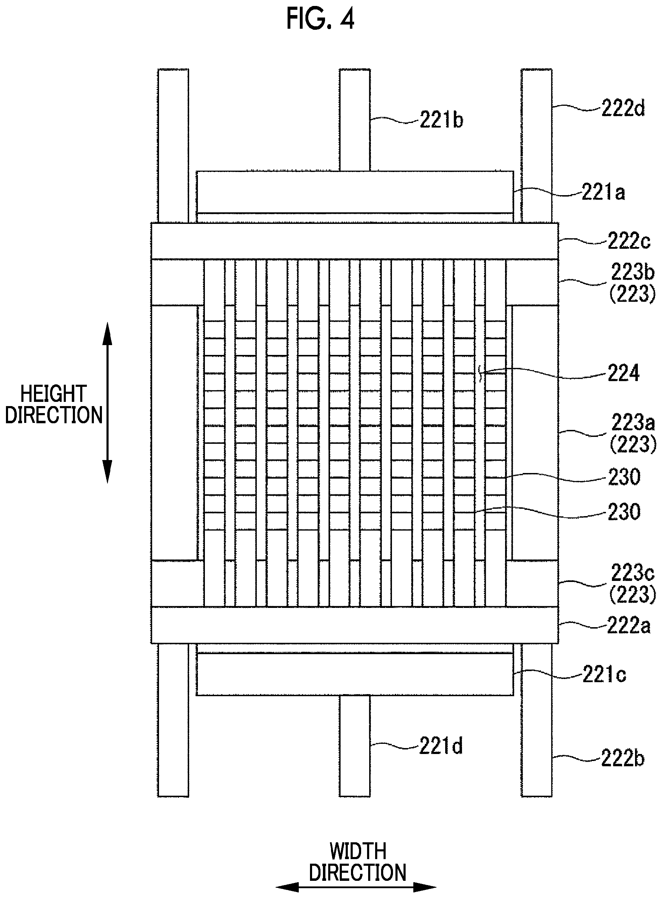

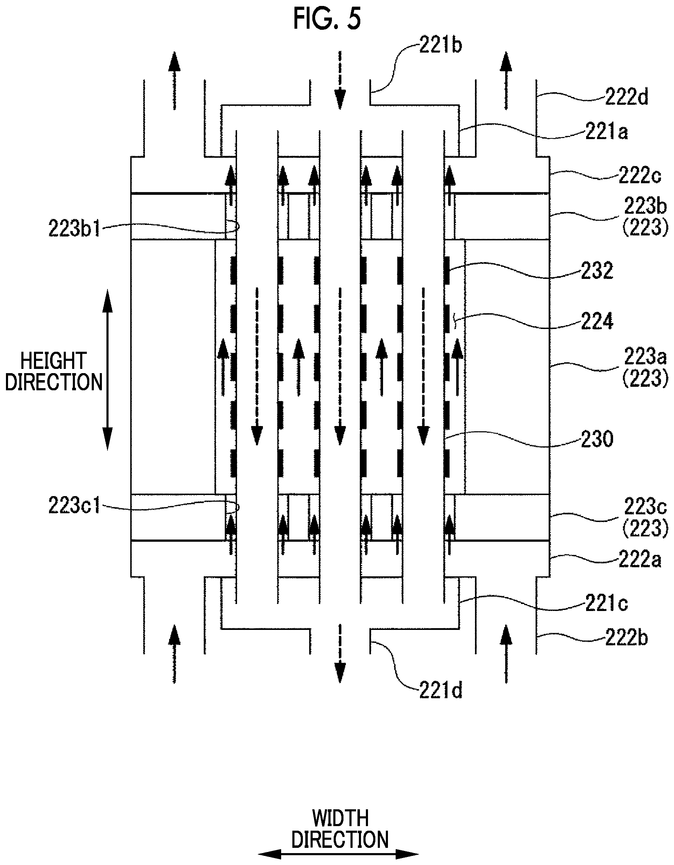

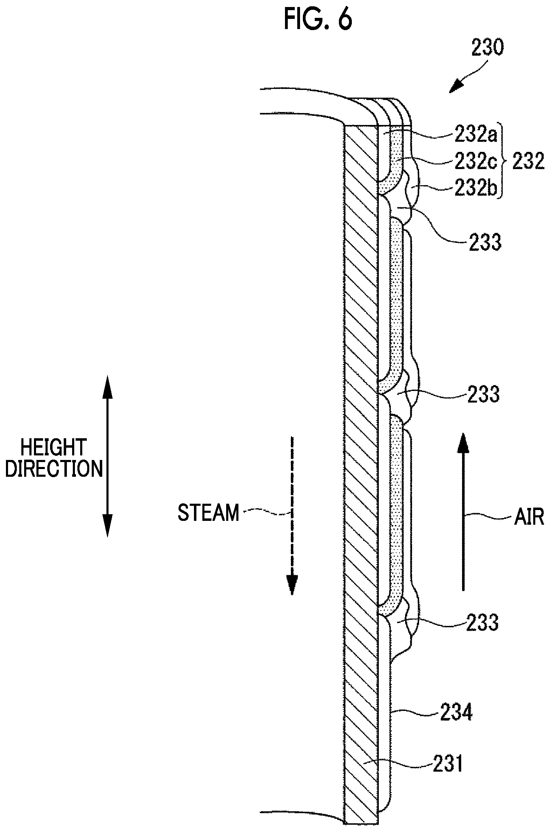

FIG. 3 is a side view of the electrolysis cartridge 220. In addition, FIG. 4 is a front view of the electrolysis cartridge 220 shown in FIG. 3. In addition, FIG. 5 is a schematic view of the electrolysis cartridge shown in FIG. 4. In addition, FIG. 6 is a partially enlarged cross-sectional view of a cell stack 230 in the vicinity of the electrolysis cell 232 shown in FIG. 5.

As shown in FIGS. 3, 4, and 5, the electrolysis cartridge 220 includes a plurality of cell stacks 230, a steam supply header 221a, a hydrogen exhaust header 221c, an air supply header 222a, an oxygen-enriched air exhaust header 222c, and cartridge insulation 223.

As shown in FIG. 6, each cell stack 230 is a cylindrical component extending in a height direction, and has a substrate tube 231, a solid oxide electrolysis cell 232 (hereinafter, simply referred to as "electrolysis cell 232"), an interconnector 233, and a lead film 234.

The substrate tube 231 is a cylindrical tubular body extending in an axial direction, and is formed of a porous material.

A plurality of electrolysis cells 232 and interconnectors 233 formed between adjacent electrolysis cells 232 are formed on an outer peripheral surface of the substrate tube 231.

The electrolysis cell 232 has a cathode 232a, an anode 232b, and an electrolyte layer 232c provided between the cathode 232a and the anode 232b.

The cell stack 230 includes a lead film 234 that is electrically connected through the interconnector 233 to the anode 232b of an electrolysis cell 232 formed at one end in the axial direction of the substrate tube 231 among the plurality of electrolysis cells 232 formed on the outer peripheral surface of the substrate tube 231, and includes a lead film 234 that is electrically connected to the cathode 232a of an electrolysis cell 232 formed at the other end on the opposite side.

The lead film 234 supplies DC power to the plurality of electrolysis cells 232 connected in series through the interconnectors 233.

When electric power is supplied from outside between the cathode 232a and the anode 232b through the lead film 234, a part of high-temperature steam supplied to the cathode 232a receives electrons and is separated into hydrogen and oxygen ions to generate hydrogen. The separated oxygen ions move through the electrolyte layer 232c to the anode 232b and release electrons, whereby oxygen is generated.

The plurality of cell stacks 230 configured as described above are arranged, for example, as shown in FIGS. 3, 4, and 5, in an orientation in which the axial direction coincides with the height direction, while being spaced apart from one another in the depth direction and the width direction.

The steam supply header 221a is provided at an upper portion of the plurality of cell stacks 230, and the hydrogen exhaust header 221c is provided at a lower portion of the plurality of cell stacks 230.

The space defined by the steam supply header 221a communicates, at upper ends of the cell stacks 230, with a space inside each cell stack 230 (a space inside the substrate tube 231). In addition, the space defined by the hydrogen exhaust header 221c communicates, at lower ends of the cell stacks 230, with the space inside each cell stack 230. In other words, the space defined by the steam supply header 221a and the space defined by the hydrogen exhaust header 221c communicate with each other through the space inside each cell stack 230.

A steam supply pipe 221b connected to the water/steam supply line L30 is connected to the steam supply header 221a, and the steam supply header 221a is configured such that the high-temperature steam is supplied from the water/steam supply line L30. The steam guided to the steam supply header 221a flows into the space inside the cell stacks 230, and flows toward the hydrogen exhaust header 221c. In the process, the steam is electrolyzed in the cell stacks 230, and high-temperature hydrogen generated by the electrolysis and a part of the steam remaining without being electrolyzed are guided to the hydrogen exhaust header 221c. A hydrogen exhaust pipe 221d connected to the hydrogen exhaust line L40 is connected to the hydrogen exhaust header 221c, and the hydrogen exhaust header 221c is configured such that the generated hydrogen and the part of the steam are exhausted to the hydrogen exhaust line L40.

An air supply header 222a is provided at the lower portions of the plurality of cell stacks 230 in a form adjacent to an upper surface of the hydrogen exhaust header 221c, and an oxygen-enriched air exhaust header 222c is provided at the upper portions of the plurality of cell stacks 230 in a form adjacent to a lower surface of the steam supply header 221a.

The space defined by the air supply header 222a and the space defined by the oxygen-enriched air exhaust header 222c do not communicate with the space inside each cell stack 230 (the space inside the substrate tube 231).

The cartridge insulation 223 is provided between the air supply header 222a and the oxygen-enriched air exhaust header 222c spaced apart from each other in the height direction.

The cartridge insulation 223 has a cartridge peripheral insulation portion 223a, a cartridge upper insulation portion 223b, and a cartridge lower insulation portion 223c. However, the respective insulation portions may be formed integrally.

The cartridge peripheral insulation portion 223a is insulation covering the periphery of a group/aggregate formed of the plurality of cell stacks 230. A gap (space) is provided between the cartridge peripheral insulation portion 223a and the cell stacks 230. The cartridge peripheral insulation portion 223a does not cover the periphery of each individual cell stack 230.

The cartridge upper insulation portion 223b is insulation interposed between the cartridge peripheral insulation portion 223a and the oxygen-enriched air exhaust header 222c. Each cell stack 230 is inserted through the cartridge upper insulation portion 223b. An exhaust flow path 223b1 through which the oxygen-enriched air flows is provided between the cartridge upper insulation portion 223b and each cell stack 230.

The cartridge lower insulation portion 223c is insulation interposed between the cartridge peripheral insulation portion 223a and the air supply header 222a. Each cell stack 230 is inserted through the cartridge lower insulation portion 223c. A supply flow path 223c1 through which air flows is provided between the cartridge lower insulation portion 223c and each cell stack 230.

The cartridge peripheral insulation portion 223a, the cartridge upper insulation portion 223b, and the cartridge lower insulation portion 223c, included in the cartridge insulation 223, define an electrolysis chamber (reaction chamber) 224. All of the electrolysis cells 232 formed on an outer peripheral surface of each cell stack 230 are accommodated in this reaction chamber 224.

The reaction chamber 224 communicates with the space defined by the oxygen-enriched air exhaust header 222c through the exhaust flow path 223b1. In addition, the reaction chamber 224 communicates with the space defined by the air supply header 222a through the supply flow path 223c1. That is, the space defined by the air supply header 222a and the space defined by the oxygen-enriched air exhaust header 222c communicate with each other through the supply flow path 223c1, the reaction chamber 224, and the exhaust flow path 223b1.

An air supply pipe 222b connected to the primary air supply line L10 is connected to the air supply header 222a, and the air supply header 222a is configured such that air is supplied from the primary air supply line L10.

The air guided to the air supply header 222a flows into the reaction chamber 224 through the supply flow path 223c1, and flows toward the oxygen-enriched air exhaust header 222c. In the process, oxygen generated by steam electrolysis is mixed with the air supplied from the primary air supply line L10 and guided to the oxygen-enriched air exhaust header 222c through the exhaust flow path 223b1. A mixed gas of the generated oxygen and the supplied air is referred to as oxygen-enriched air.

An oxygen-enriched air exhaust pipe 222d connected to the oxygen-enriched air exhaust line L50 is connected to the oxygen-enriched air exhaust header 222c, and the oxygen-enriched air exhaust header 222c is configured such that the oxygen-enriched air is exhausted to the oxygen-enriched air exhaust line L50.

Air and/or oxygen-enriched air flowing through the reaction chamber 224 takes heat from the cell stacks 230 that have reached high temperatures (for example, approximately 700°C to 1000°C) due to an electrolysis reaction, thereby cooling the cell stacks 230 and, in turn, the electrolysis cartridge 220.

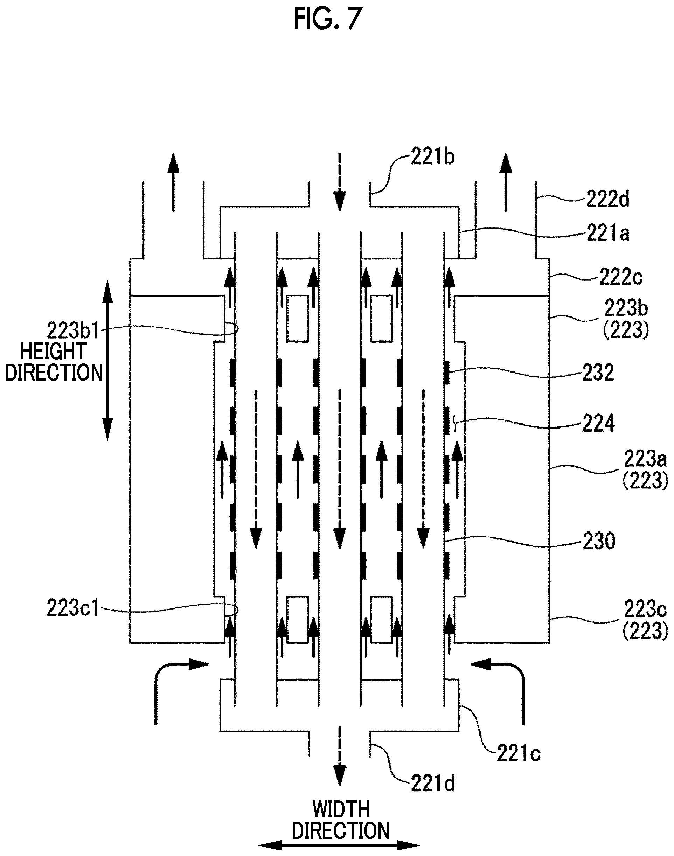

As shown in FIG. 7, in the present embodiment, the air supply header 222a and the air supply pipe 222b of the electrolysis cartridge 220 are omitted.

In this case, the primary air supply line L10 is not connected to the air supply pipe 222b and is configured to supply air to the inside of the pressure vessel 210. The air supplied to the inside of the pressure vessel 210 through the primary air supply line L10 is taken into the reaction chamber 224 through the supply flow path 223c1.

As shown in FIG. 2, submodule insulation (surrounding member) 240 is provided for the plurality of electrolysis cartridges 220.

Hereinafter, the plurality of electrolysis cartridges 220 and the submodule insulation 240 are defined as a submodule.

The submodule insulation 240 has at least one of a submodule peripheral insulation portion 241, a submodule upper insulation portion 242, and a submodule lower insulation portion 243. However, the respective insulation portions may be formed integrally. An outer periphery of the submodule insulation 240 is covered with a frame member (not shown).

The submodule peripheral insulation portion 241 is insulation covering the periphery of a group/aggregate formed of the plurality of electrolysis cartridges 220. A gap is provided between the submodule peripheral insulation portion 241 and the electrolysis cartridges 220. The submodule peripheral insulation portion 241 does not cover the periphery of each individual electrolysis cartridge 220.

The submodule upper insulation portion 242 is insulation covering an upper portion of the group/aggregate formed of the plurality of electrolysis cartridges 220.

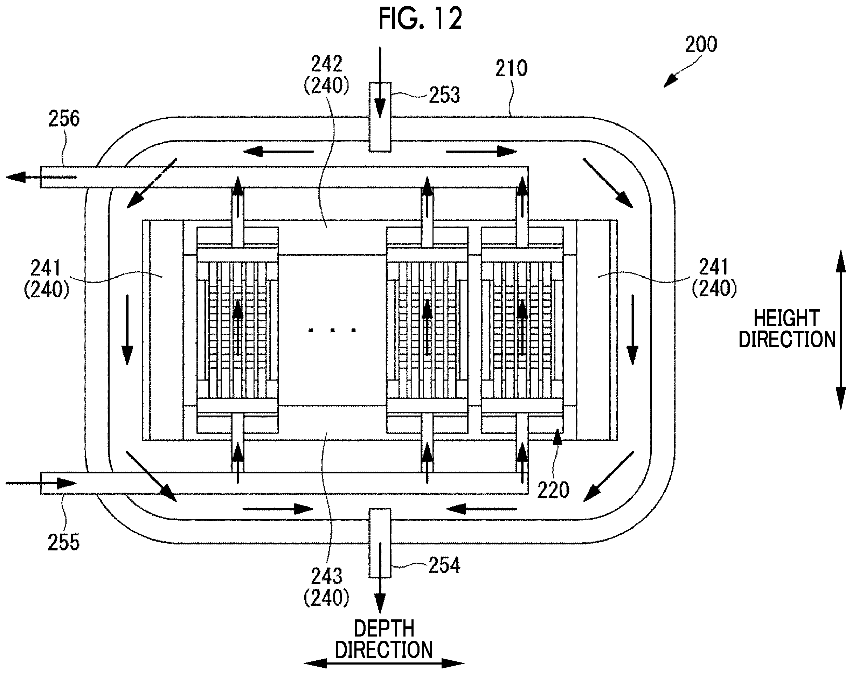

For example, as shown in FIG. 12 (not the first embodiment), the submodule lower insulation portion 243 is insulation covering a lower portion of the group/aggregate formed of the plurality of electrolysis cartridges 220.

However, as shown in FIG. 2, in the electrolysis module 200 of the present embodiment, the submodule lower insulation portion 243 is omitted. This is because the air supplied from the primary air supply line L10 is taken into the submodule insulation 240 from outside to inside (inner side) and is taken into the reaction chamber 224 through the supply flow path 223c1 provided in the cartridge lower insulation portion 223c of the electrolysis cartridge 220.

FIG. 2 shows, as an example, a form in which the entirety of the submodule lower insulation portion 243 is omitted in order to take air from outside the submodule insulation 240 that collectively surrounds the plurality of electrolysis cartridges 220 into the inside of the submodule insulation 240. However, at least a structure for taking air into the inside from the outside of the submodule insulation 240 (hereinafter, referred to as "heat medium gas intake portion") only needs to be present in any portion of the submodule insulation 240. For example, the submodule lower insulation portion 243 may be partially omitted, a part or entirety of the submodule peripheral insulation portion 241 may be omitted, a part or entirety of the submodule upper insulation portion 242 may be omitted, or a combination thereof may be used.

The structure for taking air into the inside from the outside is also provided in the frame member covering the submodule insulation 240. Naturally, the position of the structure provided in the frame member for taking in air corresponds to the position of the heat medium gas intake portion of the submodule insulation 240.

By providing the submodule insulation 240, heat from the cell stacks 230 can be blocked.

Heat from the cell stacks 230 is also blocked by the cartridge insulation 223, but when an attempt is made to thermally insulate against the heat from the cell stacks 230, which reaches approximately 700°C to 1000°C, only with the cartridge insulation 223, the cartridge insulation 223 becomes large. In addition, when the cartridge insulation 223 becomes large, the electrolysis cartridges 220 also become large. Accordingly, a configuration is adopted in which the plurality of electrolysis cartridges 220 respectively thermally insulated by the cartridge insulation 223 are collectively covered and thermally insulated by the submodule insulation 240, so that the heat from the cell stacks 230 is thermally insulated stepwise and efficiently.

The supply main pipe 251 is a pipe that communicates with the inside and the outside of the pressure vessel 210.

An end portion of the supply main pipe 251 located outside the pressure vessel 210 is connected to the primary air supply line L10. In addition, an end portion (outlet) of the supply main pipe 251 located inside the pressure vessel 210 is open inside the pressure vessel 210. Accordingly, air whose temperature has been decreased to approximately 200°C to 300°C in the heat exchanger L11 is supplied to the inside of the pressure vessel 210 through the primary air supply line L10.

The supply main pipe 251 and the primary air supply line L10 may be formed integrally or separately. In either case, the supply main pipe 251 can be regarded as a part of the primary air supply line L10.

The air supplied to the inside of the pressure vessel 210 flows inside the pressure vessel 210. At this time, the inside of the pressure vessel 210 functions as a flow path. As the air supplied to the inside of the pressure vessel 210 flows inside the pressure vessel 210, an atmosphere temperature inside the pressure vessel 210 can be reduced.

Thereafter, the air that has cooled the pressure vessel 210 is taken into the inside of the submodule insulation 240 through the heat medium gas intake portion, and then taken into the reaction chamber 224 through the supply flow path 223c1.

The exhaust main pipe 252 is a pipe that communicates with the oxygen-enriched air exhaust pipes 222d of the respective electrolysis cartridges 220 and the outside of the pressure vessel 210.

An end portion of the exhaust main pipe 252 located outside the pressure vessel 210 is connected to the oxygen-enriched air exhaust line L50. Accordingly, oxygen-enriched air exhausted from the respective electrolysis cartridges 220 is supplied to the turbine 122 through the oxygen-enriched air exhaust line L50.

The exhaust main pipe 252 and the oxygen-enriched air exhaust line L50 may be formed integrally or separately. In either case, the exhaust main pipe 252 can be regarded as a part of the oxygen-enriched air exhaust line L50.

### <Regarding Recirculation Lines>

As shown in FIG. 1, the steam electrolysis system 10 includes a first recirculation line L71 and/or a second recirculation line L72.

The first recirculation line L71 is a line that connects the heat exchanger L41 of the hydrogen exhaust line L40 to a portion of the water/steam supply line L30 located downstream of the respective heat exchangers L11, L41, and L51 and guides steam flowing through the hydrogen exhaust line L40 to the water/steam supply line L30.

The second recirculation line L72 is a line that connects a portion of the hydrogen exhaust line L40 located downstream of the heat exchanger L41 to a portion of the water/steam supply line L30 located upstream of the respective heat exchangers L11, L41, and L51 and guides water (steam that has condensed) flowing through the hydrogen exhaust line L40 to the water/steam supply line L30.

### <Regarding Control of Flow Rate and Temperature>

The steam electrolysis system 10 includes a first bypass line L81 and/or a second bypass line L82, and a controller 160.

The first bypass line L81 is a line that connects a portion of the primary air supply line L10 located upstream of the heat exchanger L11 to a portion of the oxygen-enriched air exhaust line L50 located upstream of the heat exchanger L51 and guides air flowing through the primary air supply line L10 to the oxygen-enriched air exhaust line L50.

A valve 151 is provided in the first bypass line L81. In addition, a flow meter 171 is provided in a portion of the primary air supply line L10 located downstream of a point to which the first bypass line L81 is connected.

The controller 160 acquires a flow rate of air flowing through the primary air supply line L10 from the flow meter 171, and controls an opening degree of the valve 151 so that an amount of air suitable for cooling is supplied to the electrolysis module 200. For example, the opening degree of the valve 151 can be adjusted so that an excessive amount of air is not supplied to the electrolysis module 200, thereby causing a part of air flowing through the primary air supply line L10 to flow to the oxygen-enriched air exhaust line L50.

The second bypass line L82 is a line that connects a portion of the primary air supply line L10 located upstream of the heat exchanger L11 to a portion of the primary air supply line L10 located downstream of the heat exchanger L11 and is for mixing high-temperature air before heat exchange in the heat exchanger L11 with low-temperature air after the heat exchange.

A valve 152 is provided in the second bypass line L82. In addition, a temperature sensor 181 is provided in the electrolysis module 200.

The controller 160 acquires the temperature inside the pressure vessel 210 from the temperature sensor 181 and controls an opening degree of the valve 152 so that the temperature inside the pressure vessel 210 (that is, the temperature of air supplied to the electrolysis cartridge 220) becomes an appropriate temperature. For example, the opening degree of the valve 152 can be adjusted so that excessively low-temperature air is not supplied to the electrolysis cartridge 220, thereby increasing the temperature of air flowing through the primary air supply line L10 (air after the heat exchange).

### <Other Examples of Electrolysis Module>

In the present embodiment, the air supplied to the inside of the pressure vessel 210 through the primary air supply line L10 cools the inside of the pressure vessel 210 by flowing inside the pressure vessel 210.

In this case, from the viewpoint of efficiently cooling the pressure vessel 210, for example, the heat medium gas intake portion of the submodule insulation 240 may be positioned on a side opposite to the outlet of the supply main pipe 251 (that is, the outlet of the primary air supply line L10), with the electrolysis cartridge 220 between the heat medium gas intake portion and the outlet.

The example will be described below.

### <<Other Example 1>>

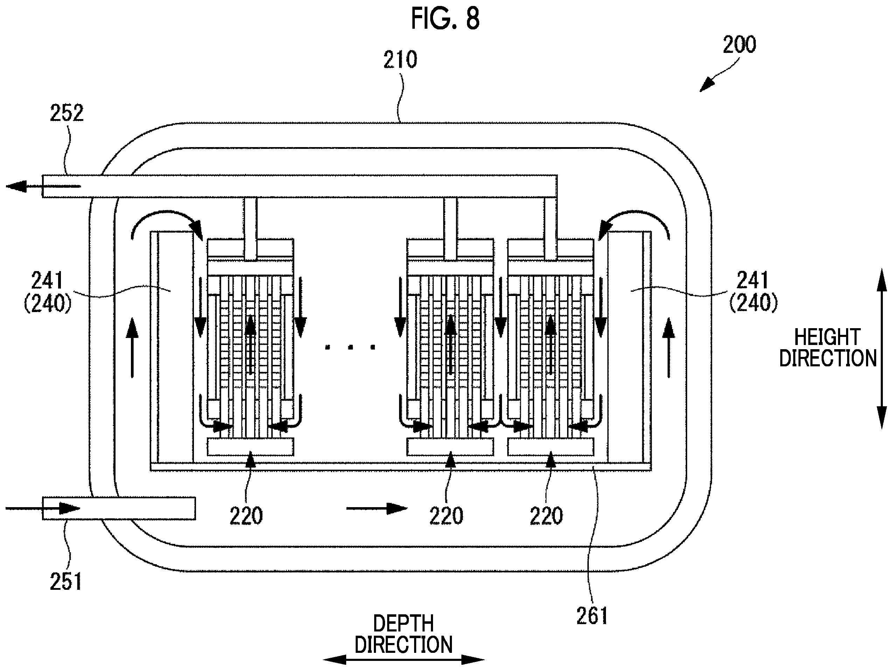

As shown in FIG. 8, a configuration may be adopted in which, in the submodule insulation 240, the submodule upper insulation portion 242 and the submodule lower insulation portion 243 are omitted, the submodule insulation 240 is formed by the submodule peripheral insulation portion 241, and air exhausted from the outlet of the supply main pipe 251 goes around to the upper portion. However, in a case where the submodule lower insulation portion 243 is left omitted, the air exhausted from the outlet of the supply main pipe 251 is immediately taken into the electrolysis cartridge 220. Therefore, by providing the electrolysis module 200 with a closing member (surrounding member) 261 that collectively closes portions below the plurality of electrolysis cartridges 220, the heat medium gas intake portion is formed so that the air exhausted from the outlet of the supply main pipe 251 (air supplied to the lower portion inside the pressure vessel 210) reliably goes around to the upper portion inside the pressure vessel 210. The heat medium gas intake portion is formed by providing, on one side, a surface through which air easily flows (a surface for taking the heat medium gas into the inside), while using the submodule insulation 240 and the closing member 261 as a surrounding member for the plurality of electrolysis cartridges 220.

Accordingly, the air exhausted from the outlet of the supply main pipe 251 can easily circulate through the entire pressure vessel 210 before being taken into the heat medium gas intake portion of the submodule insulation 240, so that a structure in which the inside of the pressure vessel 210 is easily cooled can be obtained. In addition, since the air flows along the height direction around the electrolysis cartridge 220 inside the submodule insulation 240, a structure in which the electrolysis cartridge 220 is easily cooled can be obtained.

### <<Other Example 2>>

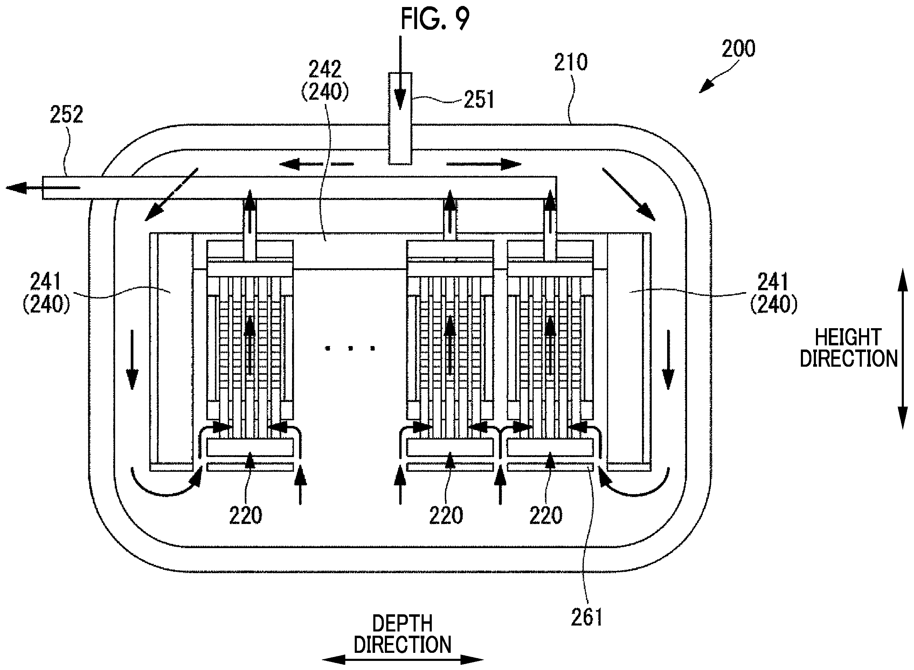

As shown in FIG. 9, the supply main pipe 251 may be positioned above the submodule, the submodule lower insulation portion 243 may be omitted from the submodule insulation 240, the submodule insulation 240 may be formed by the submodule upper insulation portion 242 and the submodule peripheral insulation portion 241, and the heat medium gas intake portion may be formed so that the air exhausted from the outlet of the supply main pipe 251 (air supplied to the upper portion inside the pressure vessel 210) goes around to the lower portion inside the pressure vessel 210.

Accordingly, the air exhausted from the outlet of the supply main pipe 251 can easily circulate through the entire pressure vessel 210 before being taken into the heat medium gas intake portion of the submodule insulation 240, and a structure in which the inside of the pressure vessel 210 is easily cooled can be obtained.

According to the present embodiment, the following effects are achieved.

Air whose temperature has been decreased by heat exchange with feedwater is supplied to the pressure vessel 210, and an atmosphere temperature inside the pressure vessel 210 can be reduced.

Accordingly, as a material of structural members accommodated inside the pressure vessel 210 (for example, members constituting the electrolysis cartridge 220), a relatively inexpensive material that does not have high heat resistance can be used, and cost reduction can be achieved. In addition, this also serves as a countermeasure against a phenomenon in which the atmosphere temperature inside the pressure vessel 210 rises by increasing pressure of the entire steam electrolysis system 10 including the electrolysis module 200.

In addition, since the feedwater can be heated by heat exchange with air, thermal efficiency of the entire steam electrolysis system 10 can be improved.

In addition, since air that is supplied to the pressure vessel 210 and cools the inside of the pressure vessel 210 is supplied to the electrolysis cartridge 220 without being taken out of the pressure vessel 210, the air can be supplied to the electrolysis cartridge 220 with a simple structure.

In addition, by mixing air before the heat exchange with the feedwater into air after the heat exchange with the feedwater, the temperature of the air after the heat exchange can be adjusted, the temperature of air supplied to the electrolysis module 200 can be appropriately controlled, and the temperature inside the pressure vessel 210 and the temperature of air supplied to the electrolysis cartridge 220 can be controlled.

In addition, since the heat medium gas intake portion of the submodule insulation 240 is positioned on a side opposite to the outlet of the supply main pipe 251 (that is, the outlet of the primary air supply line L10), with the electrolysis cartridge 220 between the heat medium gas intake portion and the outlet, air exhausted from the outlet can easily circulate through the entire pressure vessel 210 before being taken into the heat medium gas intake portion, and a structure in which the inside of the pressure vessel 210 is easily cooled can be obtained.

### [Second Embodiment]

The steam electrolysis system 10 according to the present embodiment differs from the steam electrolysis system 10 according to the first embodiment in including a return line L60, and is the same in other respects. Therefore, components that are the same as those of the steam electrolysis system 10 according to the first embodiment are denoted by the same reference signs, and description thereof is not repeated.

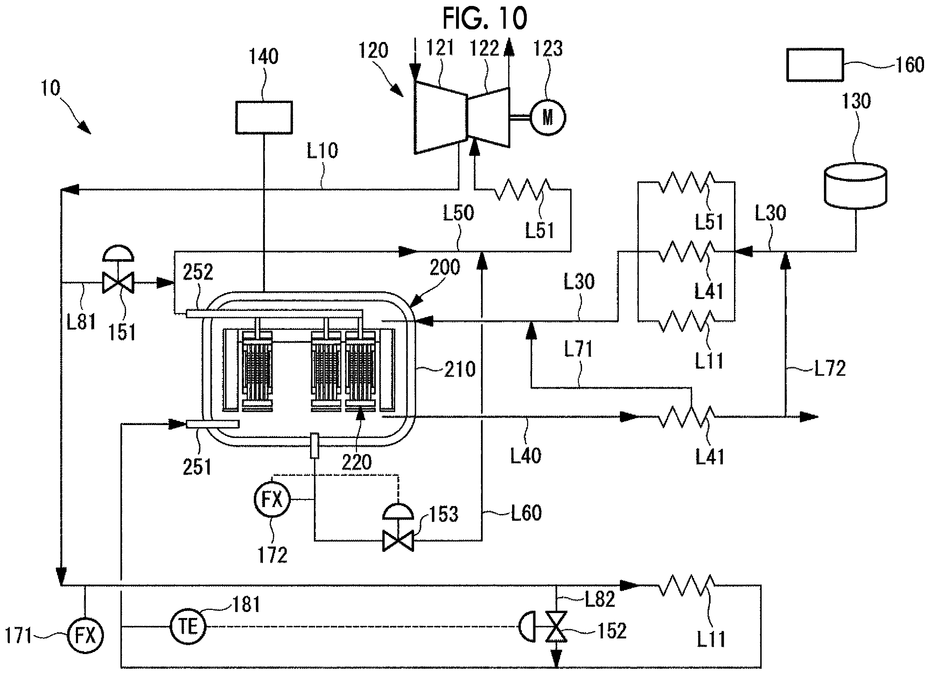

As shown in FIG. 10, the steam electrolysis system 10 includes the return line L60.

The return line L60 is a line that connects the inside of the pressure vessel 210 and a portion of the oxygen-enriched air exhaust line L50 upstream of the heat exchanger L51 and leads air inside the pressure vessel 210 to the oxygen-enriched air exhaust line L50.

By providing the return line L60, a portion of the air supplied to the inside of the pressure vessel 210 through the primary air supply line L10 can be taken out of the pressure vessel 210, and an excessive amount of air relative to operating conditions can be suppressed from being supplied to the electrolysis cartridge 220. That is, a portion of the air supplied through the primary air supply line L10 can be supplied to the electrolysis cartridge 220, and a remaining portion of the air (an excess portion of the air) can be taken out of the pressure vessel 210.

A valve 153 is provided in the return line L60. In addition, a flow meter 172 is provided in the return line L60.

The controller 160 may control an opening degree of the valve 153 so that an amount of the air supplied to the electrolysis cartridge 220 becomes appropriate, based on an amount of air appropriate for operating conditions, a flow rate acquired from the flow meter 171, and a flow rate acquired from the flow meter 172. The amount of air appropriate for operating conditions is assumed to be identified in advance.

A fixed restrictor may be provided in the return line L60 instead of the valve 153.

In the present embodiment, a temperature sensor 181 used for controlling the valve 152 provided in the second bypass line L82 is provided in a portion of the primary air supply line L10 downstream of the heat exchanger L11. However, the temperature sensor 181 may be provided in the electrolysis module 200 as in the first embodiment and the like.

According to the present embodiment, the following effects are achieved.

Since a portion of the air, which is supplied to the pressure vessel 210 and cools the inside of the pressure vessel 210, is supplied to the electrolysis cartridge 220, and a remaining portion of the air, which is supplied to the pressure vessel 210 and cools the inside of the pressure vessel 210, is taken out of the pressure vessel 210, an excessive amount of air relative to operating conditions can be suppressed from being supplied to the electrolysis cartridge 220.

### [Third Embodiment]

The steam electrolysis system 10 according to the present embodiment differs from the steam electrolysis system 10 according to the first embodiment in the configuration of the electrolysis module 200 and in including a secondary air supply line L20, and is the same in other respects. Therefore, components that are the same as those of the steam electrolysis system 10 according to the first embodiment are denoted by the same reference signs, and description thereof is not repeated.

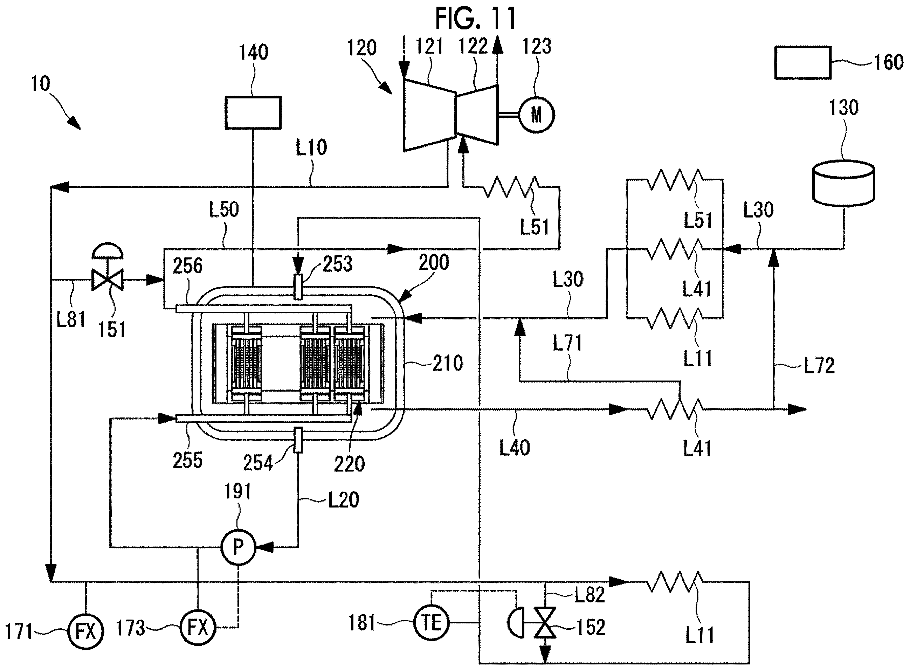

As shown in FIG. 11, the steam electrolysis system 10 includes the secondary air supply line (heat medium gas supply line) L20.

The secondary air supply line L20 is a line for taking, out of the pressure vessel 210, air that has been supplied to the inside of the pressure vessel 210 through the primary air supply line L10 and has cooled the pressure vessel 210, and for supplying the taken-out air to the electrolysis cartridge 220.

As shown in FIG. 12, the electrolysis module 200 includes, in place of the supply main pipe 251 and the exhaust main pipe 252 of the first embodiment, a primary supply main pipe 253, a primary exhaust main pipe 254, a secondary supply main pipe 255, and a secondary exhaust main pipe 256. In addition, the submodule insulation 240 is formed by the submodule peripheral insulation portion 241, the submodule upper insulation portion 242, and the submodule lower insulation portion 243.

In addition, the electrolysis cartridge 220 has the air supply header 222a and the air supply pipe 222b (see FIG. 5).

The primary supply main pipe 253 is a pipe that communicates with the inside and the outside of the pressure vessel 210.

An end portion of the primary supply main pipe 253 located outside the pressure vessel 210 is connected to the primary air supply line L10. In addition, an end portion (outlet) of the primary supply main pipe 253 located inside the pressure vessel 210 is open inside the pressure vessel 210. Accordingly, air whose temperature has been decreased to approximately 200°C to 300°C in the heat exchanger L11 is supplied to the inside of the pressure vessel 210 through the primary air supply line L10.

The primary supply main pipe 253 and the primary air supply line L10 may be formed integrally or separately. In either case, the primary supply main pipe 253 can be regarded as a part of the primary air supply line L10.

The primary exhaust main pipe 254 is a pipe that communicates with the inside and the outside of the pressure vessel 210.

An end portion of the primary exhaust main pipe 254 located outside the pressure vessel 210 is connected to one end of the secondary air supply line L20. In addition, an end portion of the primary exhaust main pipe 254 located inside the pressure vessel 210 is open inside the pressure vessel 210. Accordingly, air that has been supplied to the inside of the pressure vessel 210 and has cooled the pressure vessel 210 is guided to the secondary air supply line L20.

That is, the air supplied to the inside of the pressure vessel 210 from the primary air supply line L10 through the primary supply main pipe 253 flows inside the pressure vessel 210 and is exhausted to the secondary air supply line L20 through the primary exhaust main pipe 254. At this time, the inside of the pressure vessel 210 functions as a flow path.

The primary exhaust main pipe 254 and the secondary air supply line L20 may be formed integrally or separately. In either case, the primary exhaust main pipe 254 can be regarded as a part of the secondary air supply line L20.

The secondary supply main pipe 255 is a pipe that communicates with the air supply pipes 222b of the respective electrolysis cartridges 220 and the outside of the pressure vessel 210.

An end portion of the secondary supply main pipe 255 located outside the pressure vessel 210 is connected to the other end of the secondary air supply line L20. Accordingly, air flowing through the secondary air supply line L20 (air after cooling the pressure vessel 210) is supplied to the electrolysis cartridges 220.

The secondary exhaust main pipe 256 is a pipe that communicates with the oxygen-enriched air exhaust pipes 222d of the respective electrolysis cartridges 220 and the outside of the pressure vessel 210.

An end portion of the secondary exhaust main pipe 256 located outside the pressure vessel 210 is connected to the oxygen-enriched air exhaust line L50. Accordingly, oxygen-enriched air exhausted from the respective electrolysis cartridges 220 is supplied to the turbine 122 through the oxygen-enriched air exhaust line L50.

As described above, in the steam electrolysis system 10 according to the present embodiment, air that has cooled the pressure vessel 210 is taken out of the pressure vessel 210 by using the secondary air supply line L20, and the taken-out air is supplied to the electrolysis cartridge 220.

As shown in FIG. 11, a flow meter 173 and pressure applying means 191 are provided in the secondary air supply line L20.

The controller 160 acquires a flow rate of the air flowing through the secondary air supply line L20 from the flow meter 173 and controls the pressure applying means 191 so that an amount of air appropriate for operating conditions is supplied to the electrolysis module 200. Examples of the pressure applying means 191 include a compressor and a pump.

In the present embodiment, a temperature sensor 181 used for controlling the valve 152 provided in the second bypass line L82 is provided in a portion of the primary air supply line L10 downstream of the heat exchanger L11. However, the temperature sensor 181 may be provided in the electrolysis module 200 as in the first embodiment and the like.

According to the present embodiment, the following effects are achieved.

Since air that has been supplied to the pressure vessel 210 and has cooled the inside of the pressure vessel 210 is taken out of the pressure vessel 210, a flow rate of the taken-out air is adjusted by the pressure applying means 191, and the air whose flow rate has been adjusted is supplied to the electrolysis cartridge 220, air having an appropriate flow rate can be supplied to the electrolysis cartridge 220.

### [Fourth Embodiment]

The steam electrolysis system 10 according to the present embodiment differs from the steam electrolysis system 10 according to the third embodiment in the configuration of the secondary air supply line L20, and is the same in other respects. Therefore, components that are the same as those of the steam electrolysis system 10 according to the third embodiment are denoted by the same reference signs, and description thereof is not repeated.

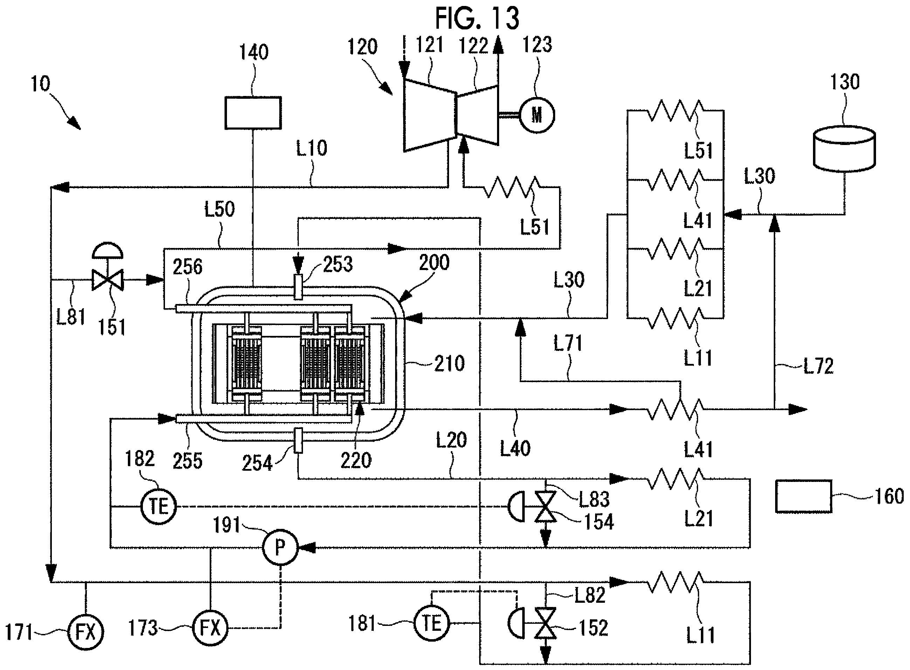

As shown in FIG. 13, a heat exchanger L21 is provided in the secondary air supply line L20.

The heat exchanger L21 serves as a heat source for heating feedwater. That is, air taken out of the pressure vessel 210 after cooling the pressure vessel 210 is supplied to the electrolysis cartridge 220 after being decreased in temperature again in the heat exchanger L21.

The heat exchanger L21 is provided, for example, in parallel in the water/steam supply line L30 together with the other heat exchangers L11, L41, and L51. However, the respective heat exchangers may be provided in series in the water/steam supply line L30. Furthermore, only some of the heat exchangers may be provided in parallel in the water/steam supply line L30, and the other heat exchangers may be provided in series.

The steam electrolysis system 10 includes a third bypass line L83.

The third bypass line L83 is a line that connects a portion of the secondary air supply line L20 located upstream of the heat exchanger L21 to a portion of the secondary air supply line L20 located downstream of the heat exchanger L21 and is for mixing high-temperature air before heat exchange in the heat exchanger L21 with low-temperature air after the heat exchange.

A valve 154 is provided in the third bypass line L83. In addition, a temperature sensor 182 is provided in a portion of the secondary air supply line L20 located downstream of the heat exchanger L21.

The controller 160 acquires a temperature of the air flowing through the secondary air supply line L20 from the temperature sensor 182 and controls an opening degree of the valve 154 so that the temperature of air supplied to the electrolysis cartridge 220 becomes an appropriate temperature. For example, the opening degree of the valve 154 can be adjusted so that excessively low-temperature air is not supplied to the electrolysis cartridge 220, thereby increasing the temperature of air flowing through the secondary air supply line L20 (air after the heat exchange).

In the present embodiment, a temperature sensor 181 used for controlling the valve 152 provided in the second bypass line L82 is provided in a portion of the primary air supply line L10 downstream of the heat exchanger L11.

However, the temperature sensor 181 may be provided in the electrolysis module 200 as in the first embodiment and the like.

According to the present embodiment, the following effects are achieved.

Since air that has been supplied to the pressure vessel 210 and has cooled the inside of the pressure vessel 210 is taken out of the pressure vessel 210, the air taken out of the pressure vessel 210 is again heat-exchanged with feedwater, and the air again heat-exchanged is supplied to the electrolysis cartridge 220, the temperature of the air that has been increased by heat exchange with the pressure vessel 210 can be decreased by heat exchange with feedwater before the air is supplied to the electrolysis cartridge 220.

### [Fifth Embodiment]

The steam electrolysis system 10 according to the present embodiment differs from the steam electrolysis system 10 according to the fourth embodiment in the configuration of the primary air supply line L10, in not including the secondary air supply line L20, and in including a circulation line L90, and is the same in other respects. Therefore, components that are the same as those of the steam electrolysis system 10 according to the fourth embodiment are denoted by the same reference signs, and description thereof is not repeated.

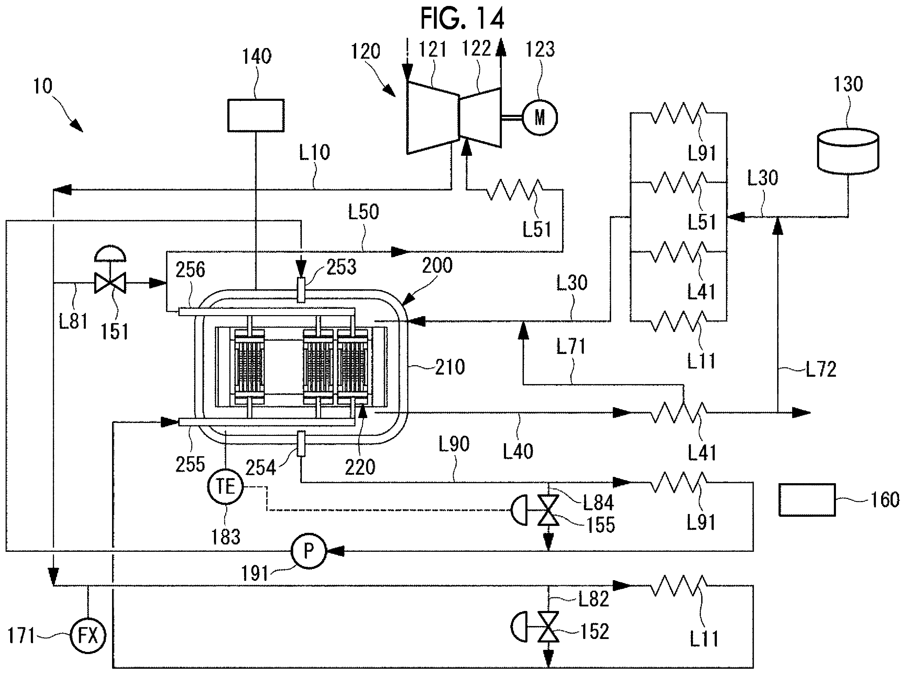

As shown in FIG. 14, the circulation line (heat medium gas supply line) L90 is a line for taking, out of the pressure vessel 210, a heat medium gas that has been supplied to the inside of the pressure vessel 210 of the electrolysis module 200 and has cooled the pressure vessel 210, and for supplying the taken-out heat medium gas again to the inside of the pressure vessel 210.

Examples of the heat medium gas include an oxidizing gas such as air.

An end portion of the primary supply main pipe 253 located outside the pressure vessel 210 is connected to one end of the circulation line L90. In addition, an end portion of the primary exhaust main pipe 254 located outside the pressure vessel 210 is connected to the other end of the circulation line L90.

That is, the circulation line L90, together with a space inside the pressure vessel 210 that functions as a flow path, constitutes a system for circulating the heat medium gas, and the circulation line L90 is independent of the other lines L10, L30, L40, and L50. Therefore, the type of heat medium gas flowing through the circulation line L90 does not depend on the types of fluids flowing through the other lines.

The primary supply main pipe 253 and the circulation line L90 may be formed integrally or separately. In addition, the primary exhaust main pipe 254 and the circulation line L90 may be formed integrally or separately. In either case, the primary supply main pipe 253 and/or the primary exhaust main pipe 254 can be regarded as a part of the circulation line L90.

An end portion of the secondary supply main pipe 255 located outside the pressure vessel 210 is connected to the primary air supply line L10. Accordingly, air flowing through the primary air supply line L10 is supplied to the electrolysis cartridge 220.

An end portion of the secondary exhaust main pipe 256 located outside the pressure vessel 210 is connected to the oxygen-enriched air exhaust line L50. Accordingly, oxygen-enriched air exhausted from the respective electrolysis cartridges 220 is supplied to the turbine 122 through the oxygen-enriched air exhaust line L50.

A heat exchanger L91 is provided in the circulation line L90.

The heat exchanger L91 serves as a heat source for heating feedwater. That is, the heat medium gas taken out of the pressure vessel 210 after cooling the pressure vessel 210 is supplied again to the inside of the pressure vessel 210 after being decreased in temperature in the heat exchanger L91.

The heat exchanger L91 is provided, for example, in parallel in the water/steam supply line L30 together with the other heat exchangers L11, L41, and L51. However, the respective heat exchangers may be provided in series in the water/steam supply line L30. Furthermore, only some of the heat exchangers may be provided in parallel in the water/steam supply line L30, and the other heat exchangers may be provided in series.

The steam electrolysis system 10 includes a fourth bypass line L84.

The fourth bypass line L84 is a line that connects a portion of the circulation line L90 located upstream of the heat exchanger L91 to a portion of the circulation line L90 located downstream of the heat exchanger L91 and is for mixing high-temperature heat medium gas before heat exchange in the heat exchanger L91 with low-temperature heat medium gas after the heat exchange.

A valve 155 is provided in the fourth bypass line L84. In addition, the pressure applying means 191 is provided in a portion of the circulation line L90 located downstream of the heat exchanger L91. In addition, a temperature sensor 183 is provided in the electrolysis module 200.

The controller 160 acquires a temperature of the heat medium gas flowing through the circulation line L90 from the temperature sensor 183 and controls the pressure applying means 191 so that an amount of heat medium gas appropriate for operating conditions is supplied to the electrolysis module 200. Examples of the pressure applying means 191 include a compressor and a pump.

In addition, the controller 160 acquires the temperature of the heat medium gas flowing through the circulation line L90 from the temperature sensor 183 and controls an opening degree of the valve 155 so that the temperature of the heat medium gas supplied to the electrolysis module 200 becomes an appropriate temperature. For example, the opening degree of the valve 155 can be adjusted so that excessively low-temperature heat medium gas is not supplied to the electrolysis module 200, thereby increasing the temperature of the heat medium gas flowing through the circulation line L90 (the heat medium gas after the heat exchange).

As described above, in the steam electrolysis system 10 according to the present embodiment, the heat medium gas that has cooled the pressure vessel 210 is taken out of the pressure vessel 210 by using the circulation line L90, and the taken-out heat medium gas is supplied again to the inside of the pressure vessel 210. In addition, the flow rate and the temperature of the heat medium gas are adjusted before the taken-out heat medium gas is supplied again to the inside of the pressure vessel 210.

According to the present embodiment, the following effects are achieved.

A system for cooling the inside of the pressure vessel 210 can be made independent of the other lines. Accordingly, the structure of the system can be simplified.

In addition, the type of heat medium gas flowing through the circulation line L90 does not depend on the types of fluids flowing through the other lines.

The systems of the respective embodiments are also applicable to a system that performs CO₂ co-electrolysis in which steam and carbon dioxide are simultaneously electrolyzed, and to a system that performs ammonia electrolytic synthesis in which steam electrolysis and ammonia synthesis from nitrogen are simultaneously performed.

### [Supplementary Notes]

The electrolysis module cooling method and the electrolysis system of the present disclosure described above can be understood as follows, for example.

An electrolysis module cooling method according to a first aspect of the present disclosure is an electrolysis module cooling method for cooling an electrolysis module (200) including at least one electrolysis cartridge (220) that includes an electrolysis cell (232) having a cathode (232a), an anode (232b), and an electrolyte layer (232c) disposed between the cathode (232a) and the anode (232b), the at least one electrolysis cartridge (220) generating hydrogen by electrolyzing steam generated from feedwater, and a container (210) accommodating the electrolysis cartridge (220), the electrolysis module cooling method including exchanging heat between a heat medium gas and the feedwater to heat the feedwater, and supplying the heat-exchanged heat medium gas to the container (210) to cool an inside of the container (210).

With the cooling method for the electrolysis module (200) according to the present aspect, the heat medium gas is heat-exchanged with the feedwater to heat the feedwater, and the heat-exchanged heat medium gas is supplied to the container (210). Therefore, the heat medium gas decreased in temperature by heat exchange with the feedwater is supplied to the container (210), and an atmosphere temperature inside the container (210) can be reduced. Accordingly, a low-grade material can be used as a material of structural members accommodated inside the container (210), and cost reduction can be achieved. In addition, this also serves as a countermeasure against a phenomenon in which an atmosphere temperature inside the container (210) rises by increasing pressure of the entire system including the electrolysis module (200).

In addition, since the feedwater can be heated by heat exchange with the heat medium gas, thermal efficiency of the entire system can be improved.

An electrolysis module cooling method according to a second aspect of the present disclosure is the electrolysis module cooling method according to the first aspect, in which the heat medium gas, which is supplied to the container (210) and cools the inside of the container (210), is supplied to the electrolysis cartridge (220).

With the cooling method for the electrolysis module (200) according to the present aspect, the heat medium gas, which is supplied to the container (210) and cools the inside of the container (210), is supplied to the electrolysis cartridge (220). Therefore, the temperature of the electrolysis cartridge (220) can be maintained at an appropriate temperature by the heat medium gas.

An electrolysis module cooling method according to a third aspect of the present disclosure is the electrolysis module cooling method according to the second aspect, in which the heat medium gas, which is supplied to the container (210) and cools the inside of the container (210), is supplied to the electrolysis cartridge (220) without being taken out of the container (210).

With the cooling method for the electrolysis module (200) according to the present aspect, the heat medium gas, which is supplied to the container (210) and cools the inside of the container (210), is supplied to the electrolysis cartridge (220) without being taken out of the container (210). Therefore, the heat medium gas can be supplied to the electrolysis cartridge (220) with a simple structure.

An electrolysis module cooling method according to a fourth aspect of the present disclosure is the electrolysis module cooling method according to the second aspect, in which a portion of the heat medium gas, which is supplied to the container (210) and cools the inside of the container (210), is supplied to the electrolysis cartridge (220), and a remaining portion of the heat medium gas, which is supplied to the container (210) and cools the inside of the container (210), is taken out of the container (210).

With the cooling method for the electrolysis module (200) according to the present aspect, a portion of the heat medium gas, which is supplied to the container (210) and cools the inside of the container (210), is supplied to the electrolysis cartridge (220), and a remaining portion of the heat medium gas, which is supplied to the container (210) and cools the inside of the container (210), is taken out of the container (210). Therefore, an excessive amount of the heat medium gas relative to operating conditions can be suppressed from being supplied to the electrolysis cartridge (220).

An electrolysis module cooling method according to a fifth aspect of the present disclosure is the electrolysis module cooling method according to the second aspect, in which the heat medium gas, which is supplied to the container (210) and cools the inside of the container (210), is taken out of the container (210), a flow rate of the taken-out heat medium gas is adjusted, and the heat medium gas with the adjusted flow rate is supplied to the electrolysis cartridge (220).

With the cooling method for the electrolysis module (200) according to the present aspect, the heat medium gas, which is supplied to the container (210) and cools the inside of the container (210), is taken out of the container (210), a flow rate of the taken-out heat medium gas is adjusted, and the heat medium gas with the adjusted flow rate is supplied to the electrolysis cartridge (220). Therefore, the heat medium gas with an appropriate flow rate can be supplied to the electrolysis cartridge (220).

An electrolysis module cooling method according to a sixth aspect of the present disclosure is the electrolysis module cooling method according to the second aspect, in which the heat medium gas, which is supplied to the container (210) and cools the inside of the container (210), is taken out of the container (210), the heat medium gas taken out of the container (210) is again heat-exchanged with the feedwater, and the heat medium gas again heat-exchanged is supplied to the electrolysis cartridge (220).

With the cooling method for the electrolysis module (200) according to the present aspect, the heat medium gas, which is supplied to the container (210) and cools the inside of the container (210), is taken out of the container (210), the heat medium gas taken out of the container (210) is again heat-exchanged with the feedwater, and the heat medium gas again heat-exchanged is supplied to the electrolysis cartridge (220). Therefore, the temperature of the heat medium gas that has been increased by heat exchange with the container (210) can be decreased by heat exchange with the feedwater before the heat medium gas is supplied to the electrolysis cartridge (220).

An electrolysis module cooling method according to a seventh aspect of the present disclosure is the electrolysis module cooling method according to the first aspect, in which the heat medium gas, which is supplied to the container (210) and cools the inside of the container (210), is taken out of the container (210), the heat medium gas taken out of the container (210) is again heat-exchanged with the feedwater, and the heat medium gas again heat-exchanged is again supplied to the inside of the container (210).

With the cooling method for the electrolysis module (200) according to the present aspect, the heat medium gas, which is supplied to the container (210) and cools the inside of the container (210), is taken out of the container (210), the heat medium gas taken out of the container (210) is again heat-exchanged with the feedwater, and the heat medium gas again heat-exchanged is again supplied to the inside of the container (210). Therefore, a system for cooling the inside of the container (210) can be made independent. Accordingly, the structure of the system can be simplified.

An electrolysis module cooling method according to an eighth aspect of the present disclosure is the electrolysis module cooling method according to any one of the first to seventh aspects, in which the heat medium gas before the heat exchange with the feedwater is mixed into the heat medium gas after the heat exchange with the feedwater.

With the cooling method for the electrolysis module (200) according to the present aspect, since the heat medium gas before the heat exchange with the feedwater is mixed into the heat medium gas after the heat exchange with the feedwater, the temperature of air after heat exchange can be adjusted, the temperature of air supplied to the electrolysis module (200) can be appropriately controlled, and the temperature inside the container (210) and the temperature of air supplied to the electrolysis cartridge (220) can be controlled.

An electrolysis module cooling method according to a ninth aspect of the present disclosure is the electrolysis module cooling method according to the eighth aspect, in which, in accordance with at least one of a temperature inside the container (210) and a temperature of the heat medium gas after the heat exchange, a flow rate of the heat medium gas to be mixed is adjusted.

With the cooling method for the electrolysis module (200) according to the present aspect, since, in accordance with at least one of a temperature inside the container (210) and a temperature of the heat medium gas after the heat exchange, a flow rate of the heat medium gas to be mixed is adjusted, the temperature of the heat medium gas can be maintained at an appropriate temperature by feeding back the temperature inside the container (210) and the temperature of the heat medium gas after the heat exchange.

An electrolysis system according to a tenth aspect of the present disclosure includes an electrolysis module (200), a heat exchanger (L11, L21, L91), and a heat medium gas supply line (L10, L20, L90), in which the electrolysis module (200) has at least one electrolysis cartridge (220) and a container (210), the electrolysis cartridge (220) includes an electrolysis cell (232) having a cathode (232a), an anode (232b), and an electrolyte layer (232c) disposed between the cathode (232a) and the anode (232b), and generates hydrogen by electrolyzing steam generated from feedwater, the container (210) accommodates the electrolysis cartridge (220), and the heat medium gas supply line (L10, L20, L90) is a line through which a heat medium gas flows, and is configured to supply, to the heat exchanger (L11, L21, L91), the heat medium gas as a heat source for heating the feedwater and to supply, to the container (210), the heat medium gas subjected to heat exchange in the heat exchanger (L11, L21, L91).

With the electrolysis system (10) according to the present aspect, the heat medium gas supply line (L10, L20, L90) is a line through which a heat medium gas flows, and is configured to supply, to the heat exchanger (L11, L21, L91), the heat medium gas as a heat source for heating the feedwater and to supply, to the container (210), the heat medium gas subjected to heat exchange in the heat exchanger (L11, L21, L91). Therefore, the heat medium gas subjected to heat exchange in the heat exchanger (L11, L21, L91) and decreased in temperature by heat exchange with the feedwater is supplied to the container (210), and an atmosphere temperature inside the container (210) can be reduced. Accordingly, a low-grade material can be used as a material of the container (210), and cost reduction can be achieved. In addition, this also serves as a countermeasure against a phenomenon in which an atmosphere temperature inside the container (210) rises by increasing pressure of the entire system including the electrolysis module (200).

In addition, since the feedwater can be heated by heat exchange with the heat medium gas, thermal efficiency of the entire system can be improved.

An electrolysis system according to an eleventh aspect of the present disclosure is the electrolysis system according to the tenth aspect, in which the heat medium gas supply line (L10, L20, L90) has an outlet from which the supplied heat medium gas is exhausted, the outlet is located inside the container (210), the electrolysis module (200) has a surrounding member (240, 261) covering a plurality of the electrolysis cartridges (220), the surrounding member (240, 261) has a heat medium gas intake portion that takes the heat medium gas into an inside of the surrounding member (240, 261), and the surrounding member (240, 261) is accommodated in the container (210) together with the electrolysis cartridges (220).

With the electrolysis system (10) according to the present aspect, the heat medium gas supply line (L10, L20, L90) has an outlet from which the supplied heat medium gas is exhausted, the outlet is located inside the container (210), the electrolysis module (200) has a surrounding member (240, 261) covering a plurality of the electrolysis cartridges (220), the surrounding member (240, 261) has a heat medium gas intake portion that takes the heat medium gas into an inside of the surrounding member (240, 261), and the surrounding member (240, 261) is accommodated in the container (210) together with the electrolysis cartridges (220). Therefore, the heat medium gas exhausted into the inside of the container (210) can be taken directly into the electrolysis cartridge (220) through the heat medium gas intake portion. Accordingly, the heat medium gas can be supplied to the electrolysis cartridge (220) with a simple structure.

An electrolysis system according to a twelfth aspect of the present disclosure is the electrolysis system according to the eleventh aspect, in which the heat medium gas intake portion is located on a side opposite to the outlet with the electrolysis cartridge (220) between the heat medium gas intake portion and the outlet.

With the electrolysis system (10) according to the present aspect, since the heat medium gas intake portion is located on a side opposite to the outlet with the electrolysis cartridge (220) between the heat medium gas intake portion and the outlet, the heat medium gas exhausted from the outlet can easily circulate through the entire container (210) before being taken into the heat medium gas intake portion, and a structure in which the inside of the container (210) is easily cooled can be obtained.

### Reference Signs List

10: steam electrolysis system (electrolysis system)
120: compression device
121: compressor
122: turbine
123: electric motor
130: feedwater supply device
140: power supply device
151, 152, 153, 154, 155: valve
160: controller
171, 172, 173: flow meter
181, 182, 183: temperature sensor
191: pressure applying means
200: electrolysis module
210: pressure vessel
220: electrolysis cartridge
221a: steam supply header
221b: steam supply pipe
221c: hydrogen exhaust header
221d: hydrogen exhaust pipe
222a: air supply header
222b: air supply pipe
222c: oxygen-enriched air exhaust header
222d: oxygen-enriched air exhaust pipe
223: cartridge insulation
223a: cartridge peripheral insulation portion
223b: cartridge upper insulation portion
223b1: exhaust flow path
223c: cartridge lower insulation portion
223c1: supply flow path
224: electrolysis chamber (reaction chamber)
230: cell stack
231: substrate tube
232: electrolysis cell
232a: cathode
232b: anode
232c: electrolyte layer
233: interconnector
234: lead film
240: submodule insulation (surrounding member)
241: submodule peripheral insulation portion
242: submodule upper insulation portion
243: submodule lower insulation portion
251: supply main pipe
252: exhaust main pipe
253: primary supply main pipe
254: primary exhaust main pipe
255: secondary supply main pipe
256: secondary exhaust main pipe
261: closing member (surrounding member)
L10: primary air supply line (heat medium gas supply line)
L11: heat exchanger
L20: secondary air supply line (heat medium gas supply line)
L21: heat exchanger
L30: water/steam supply line
L40: hydrogen exhaust line
L41: heat exchanger
L50: oxygen-enriched air exhaust line
L51: heat exchanger
L60: return line
L71: first recirculation line
L72: second recirculation line
L81: first bypass line
L82: second bypass line
L83: third bypass line
L84: fourth bypass line
L90: circulation line (heat medium gas supply line)
L91: heat exchanger

## Claims

1. An electrolysis module cooling method for cooling an electrolysis module including:
at least one electrolysis cartridge that includes an electrolysis cell having a cathode, an anode, and an electrolyte layer disposed between the cathode and the anode, the at least one electrolysis cartridge generating hydrogen by electrolyzing steam generated from feedwater; and
a container accommodating the electrolysis cartridge,
the electrolysis module cooling method comprising:
exchanging heat between a heat medium gas and the feedwater to heat the feedwater; and
supplying the heat-exchanged heat medium gas to the container to cool an inside of the container.

2. The electrolysis module cooling method according to claim 1, wherein the heat medium gas, which is supplied to the container and cools the inside of the container, is supplied to the electrolysis cartridge.

3. The electrolysis module cooling method according to claim 2, wherein the heat medium gas, which is supplied to the container and cools the inside of the container, is supplied to the electrolysis cartridge without being taken out of the container.

4. The electrolysis module cooling method according to claim 2,
wherein a portion of the heat medium gas, which is supplied to the container and cools the inside of the container, is supplied to the electrolysis cartridge, and
a remaining portion of the heat medium gas, which is supplied to the container and cools the inside of the container, is taken out of the container.

5. The electrolysis module cooling method according to claim 2,
wherein the heat medium gas, which is supplied to the container and cools the inside of the container, is taken out of the container,
a flow rate of the taken-out heat medium gas is adjusted, and
the heat medium gas with the adjusted flow rate is supplied to the electrolysis cartridge.

6. The electrolysis module cooling method according to claim 2,
wherein the heat medium gas, which is supplied to the container and cools the inside of the container, is taken out of the container,
the heat medium gas taken out of the container is again heat-exchanged with the feedwater, and
the heat medium gas again heat-exchanged is supplied to the electrolysis cartridge.

7. The electrolysis module cooling method according to claim 1,
wherein the heat medium gas, which is supplied to the container and cools the inside of the container, is taken out of the container,
the heat medium gas taken out of the container is again heat-exchanged with the feedwater, and
the heat medium gas again heat-exchanged is again supplied to the inside of the container.

8. The electrolysis module cooling method according to any one of claims 1 to 7, wherein the heat medium gas before the heat exchange with the feedwater is mixed into the heat medium gas after the heat exchange with the feedwater.

9. The electrolysis module cooling method according to claim 8, wherein, in accordance with at least one of a temperature inside the container and a temperature of the heat medium gas after the heat exchange, a flow rate of the heat medium gas to be mixed is adjusted.

10. An electrolysis system comprising:
an electrolysis module;
a heat exchanger; and
a heat medium gas supply line,
wherein the electrolysis module has at least one electrolysis cartridge and a container,
the electrolysis cartridge includes an electrolysis cell having a cathode, an anode, and an electrolyte layer disposed between the cathode and the anode, and
generates hydrogen by electrolyzing steam generated from feedwater, the container accommodates the electrolysis cartridge, and
the heat medium gas supply line is a line through which a heat medium gas flows, and
is configured to supply, to the heat exchanger, the heat medium gas as a heat source for heating the feedwater and to supply, to the container, the heat medium gas subjected to heat exchange in the heat exchanger.

11. The electrolysis system according to claim 10,
wherein the heat medium gas supply line has an outlet from which the supplied heat medium gas is exhausted,
the outlet is located inside the container,
the electrolysis module has a surrounding member covering a plurality of the electrolysis cartridges,
the surrounding member has a heat medium gas intake portion that takes the heat medium gas into an inside of the surrounding member, and
the surrounding member is accommodated in the container together with the electrolysis cartridges.

12. The electrolysis system according to claim 11, wherein the heat medium gas intake portion is located on a side opposite to the outlet with the electrolysis cartridge between the heat medium gas intake portion and the outlet.
